# FASCICULE DE BREVET EUROPEEN

(11) **EP 0 615 052 B1**
(45) Date de publication et mention de la délivrance du brevet: **30.07.1997**
(21) Numéro de dépôt: 94420084.9
(22) Date de dépôt: 10.03.1994
(51) Int. Cl.: E06B 9/88, F16H 35/00

(54) **Treuil à limiteur de course pour la manoeuvre des stores, volets roulants et autres dispositifs de fermeture à enroulement**
Rolladen- oder Jalousienantrieb mit Begrenzungsvorrichtung
Drive with an end-of-course mechanism for controlling blinds, shutters and other role-up closing devices

(30) Priorité: 11.03.1993 FR 9303048
(43) Date de publication de la demande: 14.09.1994
(73) Titulaire: SIMU, 70100 Arc-Les-Gray (FR)
(72) Inventeur: Decrane, Pierre, F-70100 Gray (FR)
(74) Mandataire: Monnier, Guy

(56) Documents cités:
- DE-A- 2 732 013
- DE-A- 2 823 134
- LU-A- 40 414
- US-A- 4 742 896

## Description

La présente invention a trait aux treuils pour la manoeuvre des stores, volets roulants et autres dispositifs de fermeture comprenant un tablier souple (toile, grille ou lames articulées) propre à s'enrouler sur un tambour supérieur convenablement entraîné en rotation, selon le préambule de la revendication 1.

On sait que dans ce type de fermetures, il est généralement nécessaire de doter le treuil d'un système limiteur agencé de manière à interrompre automatiquement l'entraînement en rotation du tambour dans le sens correspondant à la descente dès que le bord libre du tablier arrive en butée à la fin de sa course vers le bas. On évite de la sorte que la poursuite intempestive de l'entraînement, alors que le tablier ne peut plus descendre, provoque l'enroulement en sens inverse de celui-ci sur le tambour.

Les systèmes limiteurs connus font le plus souvent appel à une butée incorporée au treuil au niveau du couple vis sans fin-roue creuse qui, dans la majorité des cas, forme le mécanisme réducteur de celui-ci ; une telle butée interdit positivement la rotation du tambour dans le sens du dévidage du tablier en fin de course inférieure.

Les documents DE-A-28 23 134 (KLAFFT ET KLUEPPELHOLZ), DE-A-27 32 013 (SCHNOELLING), LU-A-40 414 (JEANTILS) et US-A-4 742 896 (GRANBOM) illustrent certaines des structures qui ont été proposées en pratique.

Le préambule de la revendication 1 est fondé sur le document DE-A-2 823 134.

Il convient toutefois d'observer que dans les systèmes classiques, on agit sur la roue creuse, c'est-à-dire en aval de la démultiplication, de façon à disposer d'une très large plage d'utilisation. On conçoit néanmoins que l'effet provoqué par l'entrée en fonctionnement de la butée est très brutal par suite de l'importance du couple, si bien que des endommagements du mécanisme du treuil surviennent de manière relativement fréquente.

C'est à cet inconvénient qu'entend plus particulièrement remédier la présente invention, laquelle a pour objet le treuil qui est défini à la revendication 1.

En fait l'originalité du treuil suivant l'invention réside dans le fait que son limiteur de course comprend deux engrenages qui sont portés par un axe fixe de manière à coopérer avec la roue creuse ou autre organe mené du système réducteur, lesquels engrenages présentent des nombres de dents très légèrement différents l'un par rapport à l'autre et comportent en outre un bossage latéral à profil irrégulier. A ces engrenages est associé un coulisseau avantageusement formé par une fourchette dont la partie centrale est élastiquement appliquée contre les bossages latéraux des engrenages, tandis que ses extrémités libres sont propres, lorsque les profils desdits bossages arrivent en coïncidence en définissant un bossage unique de largeur réduite, à venir coopérer avec deux butées solidaires de la vis sans fin ou organe menant similaire qui est ainsi immobilisé en rotation.

On comprend immédiatement que dans un tel système, la commande du limiteur est opérée par l'organe mené de manière telle que l'immobilisation par contact mécanique s'effectue au niveau de l'organe menant, c'est-à-dire en amont du système démultiplicateur. L'action mécanique intervient donc de façon moins brutale que dans les constructions classiques.

Le dessin annexé, donné à titre d'exemple, permettra de mieux comprendre l'invention, les caractéristiques qu'elle présente et les avantages qu'elle est susceptible de procurer.

Fig. 1 illustre en perspective l'agencement général d'un treuil suivant l'invention.

Fig. 2 est une coupe de ce treuil suivant un plan orienté transversalement à l'arbre de sortie lié au tambour d'enroulement.

Fig. 3 est la coupe suivant le plan indiqué en III-III en fig. 2.

Fig. 4 et 5 sont des coupes analogues à celles de fig. 2 et 3, les pièces étant toutefois représentées au moment où le tablier du dispositif de fermeture arrive en fin de course basse.

Sur ce dessin, la référence 1 désigne l'arbre d'entrée du treuil, arbre qu'on supposera être entraîné par une manivelle à commande manuelle ou par l'arbre d'un moteur électrique approprié. Cet arbre 1 est supporté dans un carter formé par l'assemblage de deux coquilles schématiquement représentées en 2, et il est équipé d'un organe menant constitué ici par une vis sans fin 3. Il convient d'observer qu'au voisinage de chacune de ses extrémités, la vis 3 est creusée d'une gorge 3a qui est interrompue par une butée ou goupille 4, les deux goupilles 4 étant alignées longitudinalement l'une par rapport à l'autre.

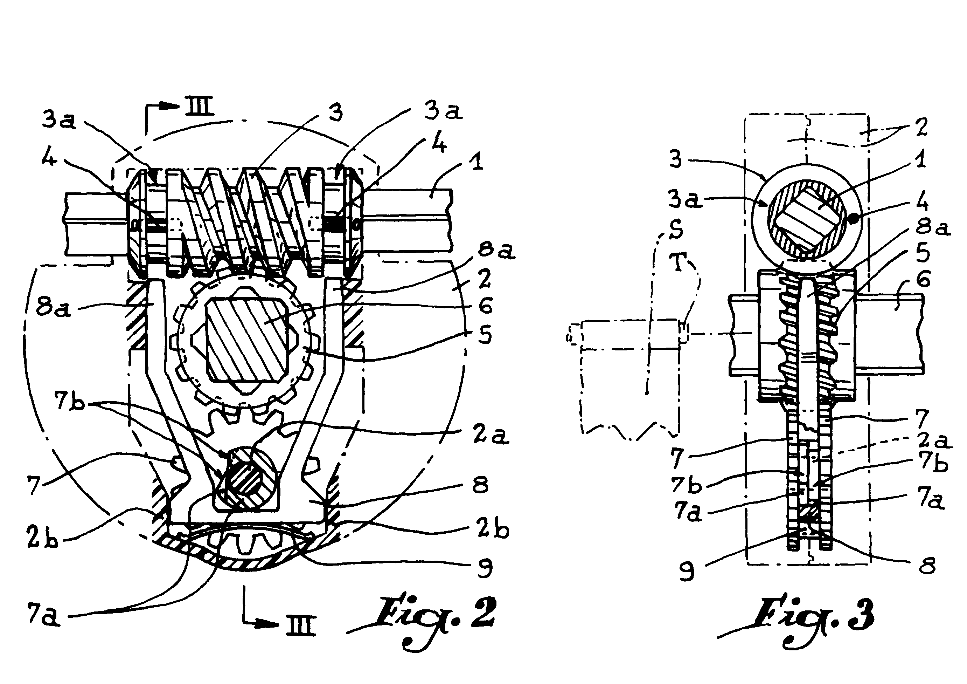

A la façon usuelle, la vis sans fin 3 engrène avec un organe mené ou roue creuse 5 calé sur un arbre de sortie 6 orienté perpendiculairement à l'arbre d'entrée 1. Cet arbre 6 est convenablement supporté dans le carter 2-2 et c'est lui qui assure l'entraînement en rotation du tambour T (fig. 3) sur lequel s'enroule le tablier souple S du dispositif de fermeture associé au treuil considéré.

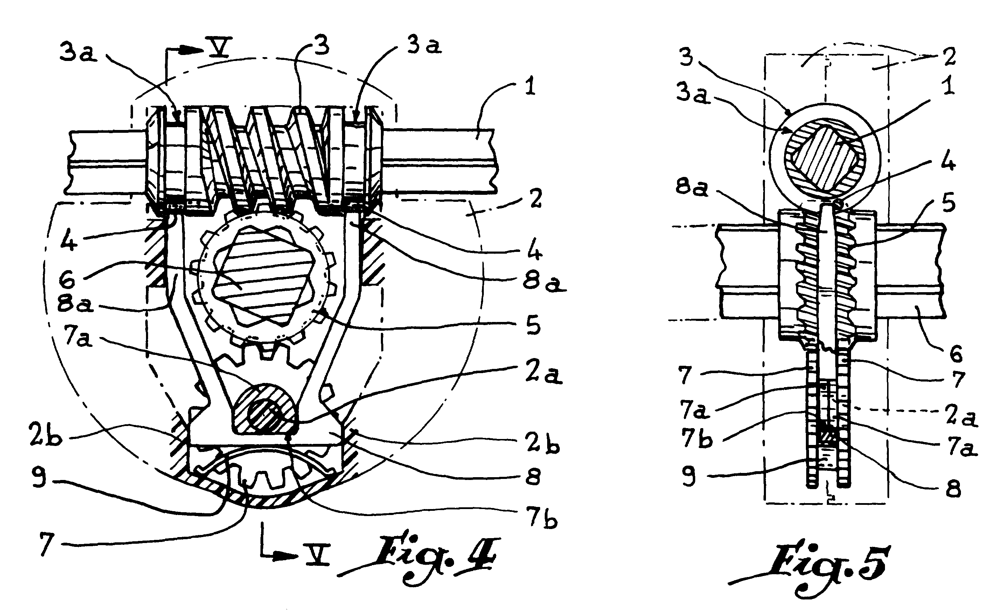

Dans le plan vertical défini par la vis 3 et sa roue creuse 5, chaque coquille du carter 2-2 comporte un axe horizontal 2a (fig. 2 et 4) qui supporte deux engrenages ou roues dentées 7 présentant des nombres de dents très légèrement différents l'un par rapport à l'autre (on peut supposer par exemple que l'un présente 15 dents tandis que l'autre n'en comporte que 14). Ces roues 7 engrènent avec la roue creuse 5 et chacune d'elles est solidaire latéralement d'un bossage axial 7a, lequel est usiné pour comporter un méplat 7b, étant remarqué que les deux bossages 7a sont disposés l'un contre l'autre entre les deux roues.

Le mécanisme du treuil comprend encore un couliseau qui, dans l'exemple de réalisation envisagé, est constitué par une fourchette 8 qui entoure la roue creuse 5 et les roues dentées 7 et 8 et qui est guidée entre des portées 2b du carter 2-2 afin que sa partie transversale ou fond vienne au niveau des bossages 7a précités ; un ressort à lame 9, prenant appui contre le carter 2-2, tend à repousser axialement la fourchette 8 en direction de la vis 3, en maintenant ainsi le fond précité élastiquement appliqué contre les deux bossages 7a. On notera que les extrémités 8a des deux branches de la fourchette 8 sont profilées pour s'engager à l'intérieur des gorges 3a de la vis 3, comme on le verra plus loin.

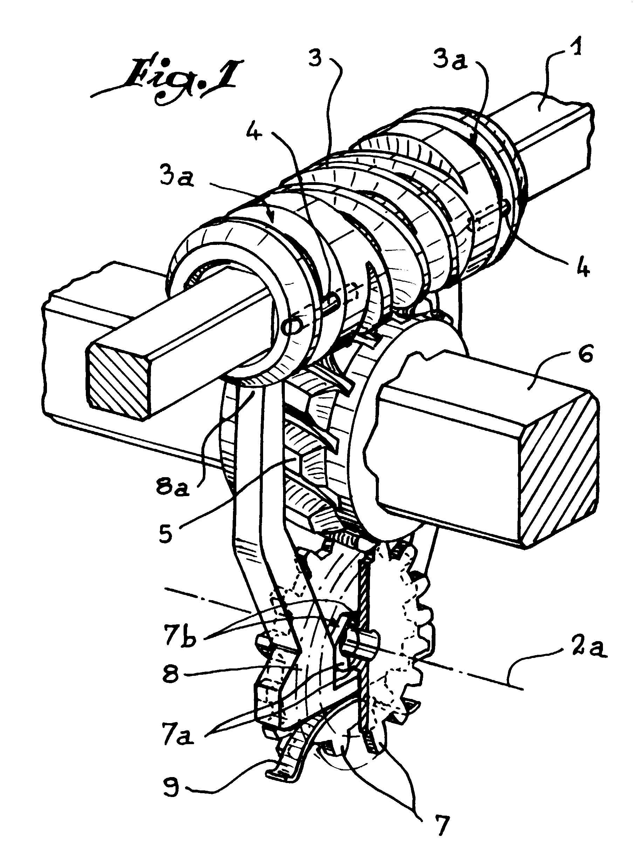

On conçoit que lorsque l'arbre 1 est mis en rotation, la vis 3 entraîne avec une très forte démultiplication l'arbre de sortie 6 à travers la roue creuse 5, en même temps que les deux roues dentées 7. Aussi longtemps que les deux méplats 7b ne sont pas en coïncidence en étant tous deux tournés vers le bas, les deux bossages 7a définissent une sorte de moyeu central à profil substantiellement cylindrique, si bien qu'en dépit de l'action du ressort 9, la fourchette 8 reste à la position rétractée illustrée en fig. 1, 2 et 3.

Par suite de la très faible différence de dents existant entre les deux roues 17, ce n'est qu'après un nombre relativement élevé de tours que les bossages 7a arriveront à la position illustrée en fig. 4 et 5 pour laquelle les deux méplats 7b se trouvent simultanément tournés vers le bas, en direction du fond de la fourchette 8. La réduction apparente de diamètre du moyeu formé par les deux bossages permet alors à la fourchette 8 de se déplacer vers le haut sous l'effet du ressort 9, de sorte que les extrémités ou dents 8a de ladite fourchette viennent s'engager dans les gorges 3a ; de ce fait, ces dents 8a vont porter contre les goupilles ou butées 4 dès que ces dernières se présenteront en vis-à-vis desdites dents au cours de la rotation de la vis 5, laquelle est alors immobilisée angulairement avec l'arbre de sortie 6 lié au tambour d'enroulement T.

Ainsi qu'on l'a souligné au début des présentes, le limiteur de course suivant l'invention, tout en restant sous la commande de la roue creuse, agit sur la vis sans fin 3, en amont donc de la démultiplication obtenue par la coopération de ladite vis avec la roue 5. L'immobilisation angulaire du treuil s'effectue dans ces conditions de manière beaucoup moins brutale que dans les contructions classiques où le dispositif limiteur agit sur la roue creuse, c'est-à-dire sur l'organe mené démultiplié.

On concoit que le moyens élastiques associés à la fourchette 8 peuvent être différents de la lame de ressort 9 qu'on a exposée ci-dessus.

On comprend également que si l'invention semble particulièrement bien adaptée aux treuils dans lesquels le système réducteur est du type à vis sans fin et roue creuse, elle reste néanmoins susceptible d'être appliquée avec avantage aux dispositifs équipés d'un mécanisme réducteur d'un autre type.

## Revendications

1. Treuil pour la manoeuvre des stores, volets roulants et autres dispositifs de fermeture comprenant un tablier déformable (S) propre à s'enrouler sur un tambour (T) solidaire de l'arbre de sortie (6) du treuil, ce dernier incorporant, outre un système réducteur formé par un organe menant (3) et un organe mené (5), un limiteur de course propre à interdire la poursuite de la rotation de l'arbre de sortie lorsque le tablier arrive en fin de course basse, le limiteur comportant deux engrenages (7) qui tout en présentant des nombres de dents très légèrement différents l'un par rapport à l'autre, sont en prise avec l'organe mené (5) caractérisé en ce que les deux engrenages (7) sont solidaires d'un bossage latéral (7a) à profil irrégulier, et en ce que le limiteur comporte un coulisseau (8) qui est élastiquement appliqué contre les deux bossages latéraux (7a) précités, tandis que son extrémité libre (8a) est propre, lorsque les profils des bossages arrivent en coïncidence en définissant un bossage unique de largeur réduite, à venir coopérer avec au moins une butée (4) solidaire de l'organe menant (3) qui est ainsi immobilisé en rotation.

2. Treuil suivant la revendication 1, caractérisé en ce que le coulisseau est constitué par une fourchette (8) dont les deux branches entourent l'organe mené (5) et les engrenages (7), tandis que sous l'effet d'un ressort (9) sa partie centrale ou fond coopère avec les bossages (7a) des engrenages (7).

3. Treuil suivant la revendication 2, caractérisé en ce que les extrémités (8a) des branches de la fourchette (8) sont disposées en vis-à-vis de deux gorges (3a) prévues latéralement dans l'organe menant (3), les butées de celui-ci étant constituées par une goupille fixée dans chacune desdites gorges.

4. Treuil suivant l'une quelconque des revendications qui précèdent, caractérisé en ce que chaque bossage latéral (7a) est établi à un profil général cylindrique et est découpé d'un méplat (7b) propre à lui conférer un profil irrégulier.

## Patentansprüche

1. Winde zur Betätigung von Vorhängen, Rolladen und anderen Schließvorrichtungen, die eine verformbare Schürze (S) aufweisen, die dazu geeignet ist, auf einer Trommel (T) aufgerollt zu werden, die mit der Abtriebswelle (6) der Winde einstückig ist, wobei letztere außer einem aus einem treibenden Element (3) und einem getriebenen Element (5) gebildeten Untersetzungssystem einen Bewegungsbegrenzer umfaßt, der zur Unterbindung der Fortführung der Drehung der Abtriebswelle geeignet ist, wenn die Schürze das untere Ende der Bewegung erreicht, wobei der Begrenzer zwei Zahnräder (7) umfaßt, die jeweils eine zueinander sehr wenig unterschiedliche Zähneanzahl aufweisen und mit dem getriebenen Element (5) in Eingriff sind, dadurch gekennzeichnet, daß die zwei Zahnräder (7) einstückig mit einem seitlichen Vorsprung (7a) mit unregelmäßigem Profil sind, und daß der Begrenzer ein Gleitstück (8) umfaßt, das elastisch an den zwei seitlichen Vorsprüngen (7a) anliegt, während sein freies Ende (8a) geeignet ist, wenn die Profile der Vorsprünge eine Überdeckungslage erreichen, in der sie einen einzigen Vorsprung mit verminderter Breite bilden, mit zumindest einem Anschlag (4) in Zusammenwirkung zu kommen, der einstückig mit dem treibenden Element (3) ist, welches auf diese Weise drehfest wird.

2. Winde gemäß Anspruch 1, dadurch gekennzeichnet, daß das Gleitstück aus einer Gabel (8) besteht, deren zwei Schenkel das angetriebene Element (5) und die Zahnräder (7) umschließen, während ihr Mittelteil oder tiefster Teil unter der Wirkung einer Feder (9) mit den Vorsprüngen (7a) der Zahnräder (7) zusammenwirkt.

3. Winde gemäß Anspruch 2, dadurch gekennzeichnet, daß die äußeren Enden (8a) der Schenkel der Gabel (8) in Gegenüberlage zu zwei Nuten (3a) angeordnet sind, die seitlich am treibenden Element (3) vorgesehen sind, wobei dessen Anschläge durch einen in jeder der Nuten befestigten Stift gebildet sind.

4. Winde gemäß einem der vorherigen Ansprüche, dadurch gekennzeichnet, daß jeder seitliche Vorsprung (7a) durch ein im allgemeinen zylindrisches Profil gebildet ist und mit einer Abflachung abgeschnitten ist, die geeignet ist, ihm ein unregelmäßiges Profil zu geben.

## Claims

1. Winch for the operation of blinds, rolling shutters and other closure devices, comprising a deformable apron (S) suitable for rolling on a drum (T) integral with the output shaft (6) of the winch, said winch incorporating, in addition to a reducing system formed by a driving member (3) and a driven member (5), a track limiter suitable for preventing the continued rotation of the output shaft when the apron reaches the bottom end of its track, the limiter comprising two cogs (7) which, while having numbers of teeth which differ very slightly from each other, are in contact with the driven member (5), characterised in that the two cogs (7) are integral with a lateral boss (7a) with an irregular profile, and in that the limiter comprises a slide (8) which is resiliently applied against the two aforementioned lateral bosses (7a), whilst its free end (8a) is suitable, when the profiles of the bosses happen to coincide so as to define a single boss of reduced width, for co-operating with at least one stop (4) integral with the driving member (3) which is thereby rotationally immobilised.

2. Winch according to claim 1, characterised in that the slide is constituted by a fork (8), the two branches of which surround the driven member (5) and the cogs (7), whilst its central portion or base co-operates with the bosses (7a) of the cogs (7) by means of a spring (9).

3. Winch according to claim 2, characterised in that the ends (8a) of the branches of the fork (8) are disposed facing two grooves (3a) provided laterally in the driving member (3), the stops of said driving member being constituted by a pin secured in each of said grooves.

4. Winch according to any of the preceding claims, characterised in that each lateral boss (7a) has a general cylindrical profile and is cut to leave a flat part (7b) suitable for giving it an irregular profile.
